# EUROPÄISCHE PATENTSCHRIFT

(11) **EP 3 795 948 B1**
(45) Veröffentlichungstag und Bekanntmachung des Hinweises auf die Patenterteilung: **15.02.2023**
(21) Anmeldenummer: 20193243.1
(22) Anmeldetag: 28.08.2020
(51) Int. Cl.: G01C 21/00, G05D 1/02

(54) **VERFAHREN ZUR VERTEILUNG VON NAVIGATIONSKARTENDATEN AN EINE MEHRZAHL VON ARBEITSMASCHINEN**
METHOD FOR DISTRIBUTING NAVIGATION MAP DATA TO A PLURALITY OF WORKING MACHINES
PROCÉDÉ DE DISTRIBUTION DE DONNÉES DE CARTE DE NAVIGATION À UNE PLURALITÉ D'ENGINS DE TRAVAUX

(30) Priorität: 17.09.2019 DE 102019214115
(43) Veröffentlichungstag der Anmeldung: 24.03.2021
(73) Patentinhaber: Robert Bosch GmbH, 70442 Stuttgart (DE)
(72) Erfinder: Becker-Asano, Christian, 70806 Kornwestheim (DE); Ferch, Markus, 71717 Beilstein (DE)

(56) Entgegenhaltungen:
- US-A1- 2012 323 431
- US-A1- 2016 129 592

## Beschreibung

In der Vision der "Factory of the Future" bzw. in der Industrie 4.0 sollten die intelligenten Roboter immer autarker und flexibler arbeiten. Diese Roboter sind nicht mehr wie bspw. "robotic arm" auf eine feste Position beschränkt, sondern können nach dem Erhalt von Kommandos selbst zum Einsatzort "gehen" und dort Arbeit ausführen.

Basis für solche Systeme und Arbeitsweisen ist, das Roboter zur Erfüllung Ihrer Aufgaben an den jeweiligen Einsatzorten stets mit exakten Kartendaten ausgestattet sind, die eine Navigation des Roboters ermöglichen. Aufgrund von sich in der Praxis in Fabriken regelmäßig ändernden lokalen Bedingungen ist es hilfreich Funktionen zur Aktualisierung von Kartendaten im Betrieb bereitzustellen. Sich ändernde lokale Bedingungen, die auf Kartendaten Einfluss haben können beispielsweise dadurch auftreten, dass in einer Werkshalle, die durch Kartendaten beschrieben wird, Materialien angeliefert werden, die ein Hindernis darstellen, produzierte Erzeugnisse abgestellt werden oder aber auch Umgruppierungen bzw. Neuanordnungen von Arbeitsstationen auftreten. Es sind auch eine Vielzahl anderer möglicher Ursachen denkbar, die eine Anpassung von Kartendaten erzeugen.

US 2012/323431 A1 und US 2016/129592 A1 beschreiben ein Verfahren und eine Vorrichtung zur Erstellung bzw. Erneuerung von Kartendaten mit Hilfe von Robotern, welche Teilkartendaten während ihrer Fahrten mit Hilfe von ihrer Sensorik erstellen können. Basierend auf den Teilkartendaten können die Kartendaten erneuert werden.

Ausgehend hiervon soll ein besonders vorteilhaftes Verfahren zur Verteilung von neuen Kartendaten an eine Mehrzahl von Arbeitsmaschinen (Robotern) beschrieben werden.

Für einen sogenannten mobilen Roboter spielt die Lokalisierung eine bedeutende Rolle. In diesem Zusammenhang ergeben sich verschiedene Teilfragestellungen. Diese Teilfragestellungen sind:
- Wo befindet sich ein Roboter? Diese Fragestellung kann auch als Ermittlung einer Anfangsposition bezeichnet werden -
- Wohin soll der Roboter gehen (Zielposition)?

- Wie geht der Roboter zur Zielposition? Hiermit ist die Ermittlung von Positionspfaden zur kollisionsfreien Erreichung der Zielposition gemeint. Schwerpunktmäßig soll hier die Führung eines Roboters von einer Anfangsposition zu einer Zielposition bzw. der Positionspfad betrachtet werden. Insbesondere sollen Methoden zur Führung eines Roboters beschrieben werden.

Insbesondere soll ein besonders vorteilhaftes Verfahren zur Verteilung von Navigationskartendaten an eine Mehrzahl von mobilen Robotern beschrieben werden. Vorteilhafte Weiterbildungen sind in den abhängigen Patentansprüchen angegeben. Die Beschreibung, insbesondere im Zusammenhang mit den Figuren, erläutert die Erfindung und gibt weitere vorteilhafte Ausführungsvarianten an.

Hier wird ein Verfahren zur Verteilung von Navigationskartendaten an eine Mehrzahl von Arbeitsmaschinen beschrieben, die Teil eines Netzwerks von Arbeitsmaschinen sind und die in diesem Netzwerk Arbeitsaufträge erfüllen, wobei die Navigationskartendaten in den Arbeitsmaschinen zur Durchführung der Arbeitsaufträge notwendig sind und Arbeitsaufträge auf Basis von Navigationskartendaten geplant sind, aufweisend die folgenden Schritte:
a) Erkennen von im Netzwerk existierenden Arbeitsaufträgen für Arbeitsmaschinen, welche auf Basis von alten Navigationskartendaten geplant wurden,
b) Durchführen einer Prüfung der im Netzwerk existierenden Arbeitsaufträge, ob diese Arbeitsaufträge mit neuen Navigationskartendaten durchführbar sind,
c) Beenden von Arbeitsaufträgen, die mit neuen Navigationskartendaten nicht durchführbar sind, und
d) Einspielen von neuen Navigationskartendaten.

Das beschriebene Verfahren ist ein Teilaspekt von Verfahren, die zum Führen eines Roboters in einer Produktionsstätte dienen. Grundsätzlich bestehen verschiedene Möglichkeiten Roboter in Produktionsstätten zu führen. Eine der möglichen (klassischen) Führungsmethoden für einen Roboter ist die elektronmagnetische Führung, wobei Metalldrähte in den Positionspfaden eingebettet und Führungsfrequenzen auf den Metalldrähten geladen werden. Durch Erkennung einer bestimmten Führungsfrequenz wird der Roboter entlang des bestimmten Metalldrahtes (Positionspfades) in die Zielposition geführt.

Daneben gibt es noch die Magnetführung und die Optikführung. All das erfordert eine physische Markierung in Form von farbigen Bändern oder Magnetspuren oder Metalldrähten, welche auf den Boden aufgeklebt oder eingebettet werden müssen. Derartige Führungsmethoden sind dementsprechend nicht so flexibel. Durch das hier beschriebene Verfahren zur Verteilung von Kartendaten werden erheblich flexiblere Führungsmethoden möglich.

Anstatt der physischen Markierungen kann die Führung von Robotern beispielsweise auch aufgrund von Laserdaten durch virtuelle Positionspfade realisiert werden, wobei die echtzeitige Position und Fahrrichtung eines Roboters gemäßen den vom Roboter gesendeten bzw. erfassten Laserdaten bestimmt werden können. Dadurch benötigt der Boden keine aufwändigen Hilfseinrichtungen (z.B. Magnetspuren) mehr. So kann der virtuelle Positionspfad je nach Bedarf und Anlass ohne großen Aufwand flexibel editiert werden. Solche Verfahren zur Führung erfordern allerdings eine sehr aufwendige Lasertechnik.

Grundsätzlich ermöglicht wird durch Führung anhand von Laserdaten und virtuelle Positionspfade bereits die Editierung eines virtuellen Positionspfades mittels eines Computerprogramms auf einer grafischen Oberfläche. Allerdings wurde erkannt, dass bei dieser Art der Führung die Schwierigkeit entsteht, dass während der Editierung sich Roboter in Ausführung ihrer Arbeitsaufträge auf den zu editierenden Positionspfaden befinden können, sodass sich ein Konflikt zwischen der Editierung und der Auftragsausführung ergeben könnte, der zu chaotischen bzw. undefinierten Zuständen führen könnte. Dies gilt insbesondere bei hoher Anzahl von Robotern und Arbeitsaufträgen.

Mit Hilfe der hier beschriebenen Methode sind neuartige Führungsverfahren möglich, die darauf basieren, dass jeder Roboter auf eigenständigen Kartendaten arbeitet, die im Roboter bzw. in einem dem Roboter zugeordneten Steuergerät gespeichert sind. Durch das beschriebene Verfahren wird es ermöglicht, dass jeder Arbeitsauftrag eine individuelle Kopie des zum Erstellungszeitpunkt gültigen Positionspfades in einer jeweils individuellen Kopie von Kartendaten aufweist. So können verschiedene Arbeitsaufträge mit verschiedenen Kartendaten ausgeführt werden.

Bei zyklischer Ausführung des Arbeitsauftrages, d.h. wenn festgelegt wurde, dass der Arbeitsauftrag gleich erneut gestartet wird, nachdem eine Ausführung beendet wurde, liegt es beim Nutzer, diesen alten Arbeitsauftrag zum richtigen Zeitpunkt zu beenden. Danach wird dem mobilen Roboter der neu erstellte, auf dem neuen Positionspfad gültige Arbeitsauftrag zugeteilt. Jedoch bei der zu erwartenden, hohen Anzahl von Arbeitsaufträgen ist diese händische Methode mit viel zu hohem Aufwand verbunden. Daher wäre es hilfreich, eine neue und effiziente Lösung zu finden, um die oben beschriebenen Einschränkungen zumindest teilweise zu überwinden.

Der Vorteil der mit dem vorliegenden Verfahren zur Verteilung von Kartendaten möglichen neuen Verfahren zur Roboterführung gegenüber den beschriebenen Lösungen basierend auf physischen Markierungen oder Lasermarkierungen liegt in der weitgehenden Automatisierung des Wechsels von einer alten Navigationskarte zu einer Neuen. Nur die von der Änderung algorithmisch betroffenen Arbeitsaufträge müssen manuell angepasst werden und der Wechsel vom alten Systemverhalten zum Neuen wird automatisiert, wodurch sichergestellt wird, dass es zu keinem Systemfehler kommen kann. Außerdem verringert das neue Verfahren den Aufwand für den Nutzer erheblich, was zu einer besseren Akzeptanz des Gesamtsystems am Markt führen wird.

Das Verfahren wird insbesondere in einem Gesamtsystem durchgeführt, dessen Funktionsweise hier näher erläutert werden soll. Das Gesamtsystem besteht aus mehreren Arbeitsmaschinen, die in einer geteilten Umgebung Arbeitsaufträge koordiniert erfüllen müssen. Die Arbeitsmaschinen sind in der Lage, sich über geeignete technische Systeme, z.B. eine Lasernavigations-basierende Hardware, selbst zu lokalisieren.

Zur Selbstlokalisierung ist mindestens eine "Navigationskarte" notwendig, die wie ein physischer Kartenplan virtuelle Positionspfade beschreibt. Die mindestens eine Navigationskarte kann in Form von Binärcodes algorithmisch umgewandelt und datenleitend übertragen werden. Die mindestens eine in Binärcodes umgewandelte Navigationskarte wird hiermit "Navigationskartendaten" bezeichnet, die in jedem Arbeitsauftrag enthaltet sind.

Nach Eingang eines Arbeitsauftrages wird zuerst ermittelt, welche Arbeitsmaschine zur Ausführung dieses Arbeitsauftrages am besten geeignet ist, und dann wird dieser Arbeitsauftrag einschließlich der Navigationskartendaten an die ermittelte Arbeitsmaschine verteilt. Nach Erhalt dieses Arbeitsauftrages wird diese Arbeitsmaschine gemäß den Navigationskartendaten selbst zum Einsatzort gehen und dort die Arbeit ausführen. Daher sind die Navigationskartendaten in den Arbeitsmaschinen zur Durchführung der Arbeitsaufträge notwendig und Arbeitsaufträge werden auf Basis von Navigationskartendaten geplant.

Die Navigationskartendaten können je nach Bedarf und Anlass mittels einer Benutzerschnittstelle auf einer grafischen Oberfläche editiert werden. Jedoch muss während der Editierung und der Verteilung von neuen Navigationskarten, insbesondere bei einer hohen Anzahl von Arbeitsmaschinen, unbedingt gewährleistet sein, dass die Ausführung bereits laufender Arbeitsaufträge nicht gestört wird und generell keine algorithmischen Probleme bei der Ausführung von Arbeitsaufträgen auftreten. Insbesondere dürfen niemals eingelastete Arbeitsaufträge verloren gehen.

Zur kontrollierten und synchronisierten Verteilung von neuen Navigationskartendaten werden in Schritt a) die existierenden Arbeitsaufträgen für Arbeitsmaschinen erkannt, welche auf Basis von alten Navigationskartendaten geplant wurden.

Dazu spielt der Zeitpunkt, in dem die neuen Navigationskartendaten gültig werden, eine entscheidende Rolle. Die vor diesem Zeitpunkt geplanten Arbeitsaufträge basieren selbstverständlich auf den alten Navigationskartendaten, und werden hier die alten Navigationskartendaten genannt. Alle nach diesem Zeitpunkt geplanten Arbeitsaufträge sind dem entsprechend die neuen Arbeitsaufträge, basierend auf neuen Navigationskartendaten. Die neuen Arbeitsaufträge werden hier als aktive Arbeitsaufträge bezeichnet.

Nach Erkennung der alten Arbeitsaufträge wird anschließend in Schritt b) eine Überprüfung der Durchführbarkeit der alten Arbeitsaufträge auf den neuen Navigationskartendaten durchgeführt.

Die neunen Arbeitsaufträge sind selbstverständlich mit den neuen Navigationskarten durchführbar. Die alten Arbeitsaufträge sind jedoch kritisch, muss hier extra überprüft werden. Der Grund liegt im Aufbau von Navigationskartendaten.

Die Navigationskartendaten stellen wie ein physischer Kartenplan ein Wegenetz dar, welches nicht nur die verschiedenen Positionspfade, sondern auch die Freiflächen außerhalb der Positionspfade umfasst. Eine Editierung betrifft meistens nur bestimmte Stellen, d.h. dass nur ein paar bestimmte Positionspfade editiert werden sollen. Darüber hinaus gelangt die jeweilige Arbeitsmaschine nur entlang des besten Positionspfades in den Einsatzort. Wenn dieser Positionspfad nicht auf die Navigationskartendatenänderung (Editierung) zutrifft, wird der zugehörige Arbeitsauftrag nicht von der Editierung beeinflusst, obwohl er auf der alten Navigationskartendatei basiert. D.h. solche alten Arbeitsaufträge sind mit neuen Navigationskartendaten durchführbar und werden in Schritt b) überprüft. Die mit neuen Navigationskartendaten durchführbaren alten Arbeitsaufträge werden hier ebenfalls als aktive Arbeitsaufträge bezeichnet.

Dagegen werden die von den Änderung betroffenen alten Arbeitsaufträge in Schritt c) beendet, weil sie nicht mit den neuen Navigationskartenden durchführbar sind. Selbstverständlich können sie zur Anpassung der neuen Navigationskartendaten unter gewissen Bedingungen editiert werden, und dann dürfen sie auch aktiviert werden.

Dann können in Schritt d) die neuen Navigationskarten eingespielt werden, indem die neuen Navigationskartendaten in jedem aktiven Arbeitsauftrag enthalten sind und weiterhin an die endsprechenden Arbeitsmaschinen verteilt werden.

In einer bevorzugten Ausführungsform sind die Arbeitsmaschinen Transportmaschinen, und die Arbeitsaufträge Transportaufträge.

Die Arbeitsmaschinen können mobile Roboter, insbesondere Transportmaschinen zum Handling des kontinuierlichen Warenstroms sein. Dem entsprechend sind die Arbeitsaufträge die Transportaufträge, nach denen die Waren von einem Ort zu einem anderen Ort transportiert werden. Darüber hinaus werden die Transportmaschinen in Flotten organisiert, die sich eine physische Umgebung teilen müssen, um gemeinsam den Transport der Waren möglichst effizient und ökonomisch zu realisieren.

In einer weiteren bevorzugten Ausführungsform weisen die Navigationskartendaten jeweils eine Kennung auf, und die Arbeitsaufträge weisen jeweils eine Liste von den Kennungen der Navigationskartendaten auf.

Um die Navigationskarten eindeutig zu identifizieren, weisen alle Navigationskartendaten jeweils eine systemweit eindeutige Kennung auf, die z.B. in Form von einem vordefinierten Binärcode codiert wurde. Überdies umfasst jeder Arbeitsauftrag eine Liste von Kennungen der Navigationskartendaten mit mindestens einer Kennung. D.h. jeder Arbeitsauftrag umfasst mindestens eine Navigationskarte. Auf allen Navigationskarten, deren Kennung in der Liste enthalten ist, ist dieser Arbeitsauftrag garantiert ausführbar, was durch das beschriebene Verfahren automatisiert sichergestellt wird.

Hierbei kann z.B. die Kennung der neuen Navigationskartendaten bei der Erstellung eines Arbeitsauftrages oder bei der Editierung eines alten Arbeitsauftrages, der mit den neuen Navigationskartendaten nicht durchführbar ist, automatisch in der Liste der jeweiligen Arbeitsaufträge eingetragen werden. Auch bei den alten Arbeitsaufträgen, die mit den neuen Navigationskartendaten durchführbar sind, kann die Kennung der neuen Navigationskartendaten in der jeweiligen Liste hinzugefügt werden.

In einer weiteren bevorzugten Ausführungsform wird ein definierter Zeitpunkt zur Ausführung der neuen Navigationskartendaten vor Schritt d) eingegeben.

Der Zeitpunkt kann grundsätzlich je nach Bedarf und Anlass nach erfolgreichem Abschluss der Editierung der Navigationskartendaten frei definiert werden. Sobald der Nutzer die Editierung beendet, wird er vom System gebeten einzugeben, ab welchem Zeitpunkt die geänderten Navigationskartendaten gültig sein sollen, z.B. ab sofort. Und ab diesem Zeitpunkt werden die Arbeitsaufträge auf Basis von neuen Navigationskartendaten geplant. Dem entsprechend sind die vor diesem Zeitpunkt geplanten Arbeitsaufträge die weiter oben beschriebenen alten Arbeitsaufträge.

In einer weiteren bevorzugten Ausführungsform werden in Schritt a) die auf Basis von alten Navigationskarendaten geplanten Arbeitsaufträge markiert.

Die in Schritt a) erkannten Arbeitsaufträge werden weiterhin in Schritt b) überprüft, ob sie mit den neuen Navigationskartendaten durchführbar sind. Wenn nicht, werden sie ggf. zur Anpassung editiert oder anders behandelt. Daher werden sie zur besseren Erkennung für die weiteren Behandlungen vorzugweise visuell und logisch markiert.

In einer weiteren bevorzugten Ausführungsform werden in Schritt c) die mit den neuen Navigationskartendaten inkompatiblen Arbeitsaufträge abgebrochen.

Die mit den neuen Navigationskartendaten inkompatiblen Arbeitsaufträge sind die Arbeitsaufträge, welche auf Basis von alten Navigationskarten erstellt und nicht mit den neuen Navigationskartendaten durchführbar sind. Wenn sie zwischenzeitlich nicht zur Anpassung der neuen Navigationskartendaten editiert werden, werden sie unter Berücksichtigung von Verteilungszustand an Arbeitsmaschinen beendet (deaktiviert).

Nach Verteilungszustand unterscheiden sich die Arbeitsaufträge weiterhin in verteilte und nicht verteilte Arbeitsaufträge. Die verteilten Arbeitsaufträge, sind die Arbeitsaufträge, die bereits an die Arbeitsmaschinen verteilt und ggf. in der Ausführung der Arbeit befindlich sind. Dagegen sind die nicht verteilten Arbeitsaufträge, wie der Name schon gesagt, nur erstellt und noch nicht an die Arbeitsmaschinen verteilt worden.

Hierbei können die mit den neuen Navigationskarten inkompatiblen Arbeitsaufträge, die noch nicht an die Arbeitsmaschinen verteilt worden sind, automatisch deaktiviert werden. Die bereits an die Arbeitsmaschinen verteilten Arbeitsaufträge, insbesondere die sich noch in der Ausführung der Arbeit befinden, müssen zumindest nach dem Ende der Ausführung der Arbeit deaktiviert werden. Die in Schritt c) abgebrochenen Arbeitsaufträge werden hier als deaktivierten Arbeitsaufträge (vgl. die aktiven Arbeitsaufträge) bezeichnet.

In einer weiteren bevorzugten Ausführungsform werden alle Arbeitsaufträge vor Schritt d) gestoppt und nicht beendete Arbeitsaufträge nach Schritt d) fortgesetzt.

Hierbei müssen sowohl die deaktivierten Arbeitsaufträge als auch die aktiven Arbeitsaufträge vor Schritt d) gestoppt werden. Nach Schritt d) werden die aktiven Arbeitsaufträge weiterhin ausgeführt.

Darüber hinaus unterscheiden sich die Arbeitsaufträge nach Ausführungsart weiterhin in die nicht-zyklischen und die zyklischen Arbeitsaufträge. Die zyklischen Arbeitsaufträge sind solche, bei denen nach Beendigung eines Arbeitsauftrages sofort mindestens eine weitere Ausführung desselben Arbeitsauftrags automatisch angestoßen wird. Hierbei werden vor Schritt d) sowohl die zyklischen Arbeitsaufträge als auch die nicht-zyklischen Arbeitsaufträge gestoppt, und nach Schritt d) werden die zyklischen Arbeitsaufträge weiterhin ausgeführt.

In einer weiteren bevorzugten Ausführungsform werden die Arbeitsmaschinen vor Schritt d) deaktiviert.

Um sicherzustellen, dass vor Schritt d) alle Arbeitsmaschinen keinen Arbeitsauftrag mehr ausführen, werden alle Arbeitsmaschinen vor Schritt d) deaktiviert. Dazu werden alle Arbeitsmaschinen, die zu diesem Zeitpunkt gerade keine Arbeitsaufträge ausführen, sofort deaktiviert. Sie können z.B. automatisch zu einer Ladestation oder einer Parkposition geschickt werden, damit das Wegenetz nicht blockiert wird.

In einer bevorzugten Ausführungsform werden die in Ausführung befindlichen nicht-zyklischen Arbeitsaufträge zu Ende ausgeführt. Dazu werden die betroffenen Arbeitsmaschinen entsprechend zu Ende der Arbeitsausführung deaktiviert.

In einer weiteren bevorzugten Ausführungsform werden die in Ausführung befindlichen zyklischen Arbeitsaufträge bis zum Ende der jeweiligen aktuellen Instanz ausgeführt und dann gestoppt. D.h. für alle Arbeitsmaschinen mit zyklischen Arbeitsaufträgen wird nur die aktuell in Ausführung befindliche Instanz des Arbeitsauftrages zu Ende ausgeführt. Eine erneute Ausführung einer neuen Instanz wird verhindert.

In einer weiteren bevorzugten Ausführungsform werden in Schritt d) mit den neuen Navigationskartendaten inkompatible Arbeitsaufträge noch auf Basis von alten Navigationskartendaten abgeschlossen.

Die mit den neuen Navigationskartendaten inkompatiblen Arbeitsaufträge sind die deaktivierten Arbeitsaufträge (vgl. aktive Arbeitsaufträge), welche auf Basis von alten Navigationskarten erstellt und nicht mit den neuen Navigationskartendaten durchführbar sind. Wenn sie vor Schritt d) zwischenzeitlich nicht zur Anpassung der neuen Navigationskartendaten editiert werden, werden sie in Schritt d) endgültig manuell gelöscht.

In einer weiteren bevorzugten Ausführungsform werden in Schritt d) Navigationskartendaten drahtlos übertragen.

Die Navigationskartendaten jeder Arbeitsmaschine werden über Funk an einen zentralen Server geschickt und dort in einer Leitstandsoftware zu einem Gesamtbild der Situation der Flotte zusammengefügt. Und ausgehend von diesem zentralen Server können die Navigationskartendaten, die in Arbeitsaufträgen enthaltet sind, weiterhin über Funk an die Arbeitsmaschinen übertragen werden.

Nicht unter die beanspruchte Erfindung fallend ist ein zentrales Steuergerät zur Ansteuerung einer Vielzahl von Arbeitsmaschinen ausgeführt, die Teil eines Netzwerks von Arbeitsmaschinen sind.

Hierbei kann das Gesamtsystem durch ein zentrales Steuergerät angesteuert werden, welches eine Leitstandsoftware umfasst, die kontrolliert die Arbeitsmaschinen auf der Basis eines vom Nutzer spezifizierten Wegenetzes (alias Navigationsgraphen), auf den für den UseCase wichtige, semantische Elemente (z.B. Ladestation, Parkstation, Quellen, Senken) annotiert wurden. Insbesondere bei Eingang eines Transportauftrages ermittelt die Leitstandsoftware, welche Arbeitsmaschine am besten geeignet ist, diesen Auftrag auszuführen und kommandiert diese, den Auftrag auf einer Vorzugsroute, die auf Basis der Navigationskarte errechnet wurde, abzuarbeiten. In einer graphischen Benutzeroberfläche, die Bestandteil der Leitstandsoftware ist, kann der Nutzer die Abarbeitung des Arbeitsauftrages jederzeit überprüfen, da der Navigationsgraph zusammen mit der aktuellen Position aller Arbeitsmaschinen angezeigt wird.

In derselben graphischen Benutzeroberfläche kann der Nutzer in eine "Konfigurationsansicht" umschalten. Diese dient dem Nutzer zum Editieren von Navigationsgraphen mit Lade- und Speicherfunktion. Darüber hinaus werden alle geplanten und in Ausführung befindlichen Arbeitsaufträge mit ihren jeweiligen Routen (Positionspfade) darauf angezeigt. Dadurch werden die Konflikte in Schritt b) erkannt und visuell (und logisch) markiert, die durch ein Editieren der Navigationskarte entstehen.

Das Verfahren zur Verteilung von Navigationskartendaten an eine Mehrzahl von Arbeitsmaschinen wird nachfolgend anhand der Figuren näher erläutert. Es ist darauf hinzuweisen, dass die Figuren nur bevorzugte Ausführungsbeispiele zeigen, auf welche die Offenbarung hier jedoch nicht beschränkt ist. Es zeigen:
- Fig. 1:: eine schematische Darstellung des beschriebenen Verfahrens
- Fig. 2:: eine schematische Darstellung der Verfahrensschritte

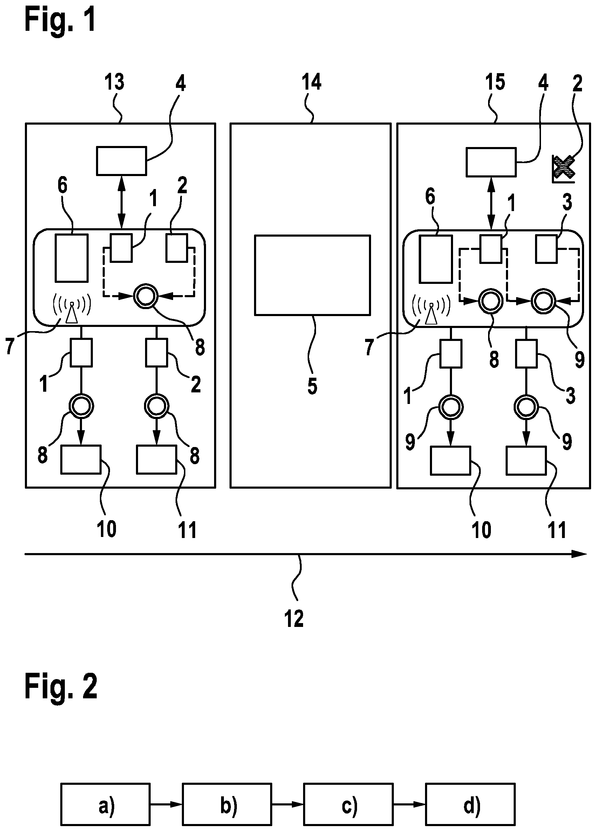

Fig.1 stellt eine schematische Darstellung des beschriebenen Verfahrens dar. Im Zeitfenster (i) 13 existieren Arbeitsauftrag (i) 1 und Arbeitsauftrag (ii) 2, die auf Basis der alten Navigationskartendaten 8 geplant wurden. Die Leitstandsoftware 6 sendet den Arbeitsauftrag (i) 1 durch Funk 7 an die Arbeitsmaschine (i) 10 und den Arbeitsauftrag (ii) 2 an die Arbeitsmaschine (ii) 11. Die grafische Benutzeroberfläche wurde in die Live-Ansicht 4 geschaltet, dadurch kann der Nutzer die Abarbeitung der Arbeitsaufträge (1,2) jederzeit überprüfen, da die Navigationskarte zusammen mit der aktuellen Position der Arbeitsmaschinen (10,11) angezeigt wird.

Im Zeitfenster (ii) 14 wird die grafische Benutzeroberfläche von der Live-Ansicht 4 in die Konfigurationsansicht 5 umgeschaltet, welche dem Nutzer zum Editieren von Navigationskarten mit Lade- und Speicherfunktion dient. Dazu werden die neuen Navigationskartendaten 9 angelegt.

Nach Anlegen der neuen Navigationskartendaten 9 werden im Zeitfenster (iii) 15 die neuen Arbeitsaufträge nur auf Basis von den neuen Navigationskartendaten 9 geplant. Hierbei wird die grafische Benutzeroberfläche wiederum auf die Live-Ansicht 4 umgeschaltet. Darauf werden alle geplanten und in Ausführung befindlichen Transportaufträge mit ihren jeweiligen Positionspfaden (Routen) angezeigt. Dadurch kann der Nutzer Konflikte erkennen, die durch das Anlegen der neuen Navigationskartendaten 9 entstehen. Wenn der im Zeitfenster (i) 13 geplante Arbeitsauftrag (ii) 2 z.B. nicht mit den neuen Navigationskartendaten 9 kompatibel ist, wird er deaktiviert. Wenn der im Zeitfenster (i) 13 geplante Arbeitsauftrag (i) 1 bspw. mit den neuen Navigationskartendaten 9 kompatibel ist, bleibt er aktiv. Der im Zeitfenster (iii) 15 erstellte Arbeitsauftrag (iii) 3 basiert auf den neuen Navigationskartendaten 9, und ist somit auch aktiv. Die aktiven Arbeitsaufträge (1,3) werden zusammen mit der Navigationskarte (ii) 2 an die Arbeitsmaschinen (10, 11) durch Funk 7 verteilt. Die Ausführung der Arbeitsaufträge (1,3) kann in der Live-Ansicht 4 administriert werden.

Fig.2 stellt eine schematische Darstellung der Verfahrensschritte dar. In Schritt a) werden die Arbeitsaufträge erkannt, die auf Basis von alten Navigationskartendaten geplant wurden. Dazu unterscheiden sich die Arbeitsaufträge in neue Arbeitsaufträge und alte Arbeitsaufträge. Die neuen Arbeitsaufträge sind auf Basis der neuen Navigationskarten definiert und werden hier als aktive Arbeitsaufträge bezeichnet. Dagegen sind die alten Arbeitsaufträge auf Basis der alten Navigationskartendaten definiert und werden weiterhin in Schritt b) überprüft, welche mit den neuen Navigationskartendaten durchführbar sind. Die mit den neunen Navigationskartendaten durchführbaren alten Arbeitsaufträge werden ebenfalls als aktive Arbeitsaufträge bezeichnet. Und die mit den neuen Navigationskartendaten nicht durchführbaren alten Arbeitsaufträge werden in Schritt c) deaktiviert, falls sie vor Schritt d) zwischenzeitlich nicht zur Anpassung der neuen Navigationskartendaten editiert werden. Dann werden die neuen Navigationskarten in Schritt d) eingespielt, in dem die Kennung der neuen Navigationskartendaten in der Liste der jeweiligen aktiven Arbeitsaufträge eingetragen bzw. eingefügt werden, anschießend die Arbeitsaufträge mit den neuen Navigationskartendaten weiterhin an die jeweiligen Arbeitsmaschinen verteilt werden. Die deaktivierten Arbeitsaufträge können hier manuell gelöscht oder editiert werden.

## Patentansprüche

1. Verfahren zur Verteilung von Navigationskartendaten (8,9) an eine Mehrzahl von Arbeitsmaschinen (10,11), die Teil eines Netzwerks von Arbeitsmaschinen (10,11) sind und die in diesem Netzwerk Arbeitsaufträge (1,2,3) erfüllen, wobei die Navigationskartendaten (8,9) in den Arbeitsmaschinen (10,11) zur Durchführung der Arbeitsaufträge (1,2,3) notwendig sind und Arbeitsaufträge (1,2,3) auf Basis von Navigationskartendaten (8,9) geplant sind, aufweisend die folgenden Schritte:
a) Erkennen von im Netzwerk existierenden Arbeitsaufträgen (1,2) für Arbeitsmaschinen (10,11), welche auf Basis von alten Navigationskartendaten geplant wurden (8),
b) Durchführen einer Prüfung der im Netzwerk existierenden Arbeitsaufträge (1,2), ob diese Arbeitsaufträge mit neuen Navigationskartendaten (9) durchführbar sind,
c) Beenden von Arbeitsaufträgen (2), die mit neuen Navigationskartendaten (9) nicht durchführbar sind, und
d) Einspielen von neuen Navigationskartendaten (9).

2. Verfahren nach Anspruch 1, wobei die Arbeitsmaschinen (10,11) Transportmaschinen, und die Arbeitsaufträge (1,2,3) Transportaufträge ausgeführt sind.

3. Verfahren nach Anspruch 1 oder 2, wobei die Navigationskartendaten (8,9) jeweils eine Kennung, und die Arbeitsaufträge (1,2,3) jeweils eine Liste von den Kennungen der Navigationskartendaten (8,9) aufweisen.

4. Verfahren nach einem der vorhergehenden Ansprüche, wobei ein definierter Zeitpunkt zur Ausführung der neuen Navigationskartendaten (9) vor Schritt d) eingegeben wird.

5. Verfahren nach einem der vorhergehenden Ansprüche, wobei in Schritt a) die erkannten Arbeitsaufträge (1,2) markiert werden.

6. Verfahren nach Anspruch 5, wobei in Schritt c) die mit neuen Navigationskartendaten (9) inkompatible Arbeitsaufträge (2) abgebrochen werden.

7. Verfahren nach einem der vorhergehenden Ansprüche, wobei alle Arbeitsaufträge (1,2,3) vor Schritt d) gestoppt und nicht beendete Arbeitsaufträge (1,3) nach Schritt d) fortgesetzt werden.

8. Verfahren nach einem der vorhergehenden Ansprüche, wobei die Arbeitsmaschinen (10,11) vor Schritt d) deaktiviert werden.

9. Verfahren nach Anspruch 8, wobei die in Ausführung befindlichen nicht-zyklischen Arbeitsaufträge zu Ende ausgeführt werden.

10. Verfahren nach Anspruch 8, wobei die in Ausführung befindlichen zyklischen Arbeitsaufträge bis zum Ende der jeweiligen aktuellen Instanz ausgeführt und dann gestoppt werden.

11. Verfahren nach einem der vorhergehenden Ansprüche, wobei in Schritt d) mit neuen Navigationskartendaten (9) inkompatible Arbeitsaufträge (2) noch auf Basis von alten Navigationskartendaten (8) abgeschlossen werden.

12. Verfahren nach einem der vorhergehenden Ansprüche, wobei in Schritt d) Navigationskartendaten (8,9) drahtlos übertragen werden.

## Claims

1. Method for distributing navigation map data (8, 9) to a plurality of work machines (10, 11) which are part of a network of work machines (10, 11) and perform work orders (1, 2, 3) in this network, wherein the navigation map data (8, 9) are needed in the work machines (10, 11) to carry out the work orders (1, 2, 3), and work orders (1, 2, 3) are planned on the basis of navigation map data (8, 9), having the following steps of:
a) detecting work orders (1, 2) for work machines (10, 11), which work orders exist in the network and were planned on the basis of old navigation map data (8),
b) checking the work orders (1, 2) which exist in the network in order to determine whether these work orders can be carried out with new navigation map data (9),
c) terminating work orders (2) which cannot be carried out with new navigation map data (9), and
d) installing new navigation map data (9).

2. Method according to Claim 1, wherein the work machines (10, 11) are transport machines, and the work orders (1, 2, 3) are transport orders.

3. Method according to Claim 1 or 2, wherein the navigation map data (8, 9) each have an identifier, and the work orders (1, 2, 3) each have a list of the identifiers of the navigation map data (8, 9).

4. Method according to one of the preceding claims, wherein a defined time for performing the new navigation map data (9) is input before step d).

5. Method according to one of the preceding claims, wherein the detected work orders (1, 2) are marked in step a).

6. Method according to Claim 5, wherein the work orders (2) incompatible with new navigation map data (9) are aborted in step c).

7. Method according to one of the preceding claims, wherein all work orders (1, 2, 3) are stopped before step d) and work orders (1, 3) which have not been completed are continued after step d).

8. Method according to one of the preceding claims, wherein the work machines (10, 11) are deactivated before step d).

9. Method according to Claim 8, wherein the non-cyclical work orders being performed are completed.

10. Method according to Claim 8, wherein the cyclical work orders being performed are performed to the end of the respective current entity and are then stopped.

11. Method according to one of the preceding claims, wherein work orders (2) incompatible with new navigation map data (9) are still completed in step d) on the basis of old navigation map data (8).

12. Method according to one of the preceding claims, wherein navigation map data (8, 9) are wirelessly transmitted in step d).

## Revendications

1. Procédé permettant de distribuer des données de carte de navigation (8, 9) à une pluralité de machines de travail (10, 11) qui font partie d'un réseau de machines de travail (10, 11) et qui accomplissent des missions de travail (1, 2, 3) dans ce réseau, dans lequel les données de carte de navigation (8, 9) sont nécessaires dans les machines de travail (10, 11) pour exécuter les missions de travail (1, 2, 3), et les missions de travail (1, 2, 3) sont planifiées sur la base de données de carte de navigation (8, 9), présentant les étapes suivantes consistant à :
a) identifier des missions de travail (1, 2) existant dans le réseau pour des machines de travail (10, 11) et qui ont été planifiées (8) sur la base d'anciennes données de carte de navigation,
b) effectuer un contrôle des missions de travail (1, 2) existant dans le réseau pour savoir si ces missions de travail peuvent être exécutées avec de nouvelles données de carte de navigation (9),
c) terminer des missions de travail (2) qui ne peuvent pas être exécutées avec de nouvelles données de carte de navigation (9), et
d) entrer de nouvelles données de carte de navigation (9).

2. Procédé selon la revendication 1, dans lequel les machines de travail (10, 11) sont des machines de transport et les missions de travail (1, 2, 3) sont des missions de transport.

3. Procédé selon la revendication 1 ou 2, dans lequel les données de carte de navigation (8, 9) présentent respectivement un identifiant, et les missions de travail (1, 2, 3) présentent respectivement une liste des identifiants des données de carte de navigation (8, 9) .

4. Procédé selon l'une quelconque des revendications précédentes, dans lequel un instant défini pour l'exécution des nouvelles données de carte de navigation (9) est introduit avant l'étape d).

5. Procédé selon l'une quelconque des revendications précédentes, dans lequel à l'étape a), les missions de travail (1, 2) identifiées sont marquées.

6. Procédé selon la revendication 5, dans lequel à l'étape c), les missions de travail (2) incompatibles avec de nouvelles données de carte de navigation (9) sont abandonnées.

7. Procédé selon l'une quelconque des revendications précédentes, dans lequel toutes les missions de travail (1, 2, 3) sont arrêtées avant l'étape d), et des missions de travail (1, 3) non terminées sont poursuivies après l'étape d).

8. Procédé selon l'une quelconque des revendications précédentes, dans lequel les machines de travail (10, 11) sont désactivées avant l'étape d).

9. Procédé selon la revendication 8, dans lequel les missions de travail non cycliques, en cours d'exécution, sont achevées.

10. Procédé selon la revendication 8, dans lequel les missions de travail cycliques, en cours d'exécution, sont exécutées jusqu'à la fin de l'instance actuelle respectivement et sont ensuite arrêtées.

11. Procédé selon l'une quelconque des revendications précédentes, dans lequel à l'étape d), des missions de travail (2) incompatibles avec de nouvelles données de carte de navigation (9) sont achevées toujours sur la base d'anciennes données de carte de navigation (8).

12. Procédé selon l'une quelconque des revendications précédentes, dans lequel à l'étape d), des données de carte de navigation (8, 9) sont transmises sans fil.
